# EUROPÄISCHE PATENTSCHRIFT

(11) **EP 0 977 625 B1**
(45) Veröffentlichungstag und Bekanntmachung des Hinweises auf die Patenterteilung: **24.01.2001**
(21) Anmeldenummer: 98913747.6
(22) Anmeldetag: 02.04.1998
(51) Int. Cl.: B01F 15/02

(54) **MOBILE VORRICHTUNG ZUR HERSTELLUNG VON WÄSSRIGEN FLÜSSIGFARBEN AUS PULVERFÖRMIGEN BESTANDTEILEN UND WASSER**
MOBILE DEVICE FOR PREPARING AQUEOUS LIQUID PAINTS FROM POWDERY COMPONENTS AND WATER
DISPOSITIF MOBILE DE PREPARATION DE PEINTURES LIQUIDES AQUEUSES A PARTIR D'ELEMENTS CONSTITUTIFS PULVERULENTS ET D'EAU

(30) Priorität: 07.04.1997 DE 19714264
(43) Veröffentlichungstag der Anmeldung: 09.02.2000
(73) Patentinhaber: Wacker-Chemie GmbH, 81737 München (DE)
(72) Erfinder: BAUMGARTL, Horst, D-84375 Kirchdorf (DE); BERNER, Detlev, Saline, MI 48176 (US)
(74) Vertreter: Schuderer, Michael, Dr.
(86) Internationale Anmeldenummer: EP9801912
(87) Internationale Veröffentlichungsnummer: WO9845033

(56) Entgegenhaltungen:
- DE-A- 3 930 337
- FR-A- 2 535 643
- US-A- 3 998 433
- US-A- 4 099 005
- US-A- 4 235 563
- US-A- 4 813 787

## Beschreibung

Die Erfindung betrifft eine mobile Vorrichtung zur Herstellung von wässrigen Flüssigfarben aus pulverförmigen Bestandteilen und Wasser, speziell auf der Grundlage von Dispersionspulvern, und ein Verfahren zur Herstellung von wässrigen Flüssigfarben mittels Dispergierung von Dispersionspulver-Zusammensetzungen in Wasser unter Verwendung dieser Vorrichtung.

Wässrige Flüssigfarben, speziell Dispersionsfarben werden werkseitig bei den Farbenherstellern in groß dimensionierten Dissolvern hergestellt. Bei den Dissolvern handelt es sich um schnell laufende Rührwerke mit gezahnten Scheiben, welche infolge der hohen Umfanggeschwindigkeit am Zahnkranz eine hervorragende Dispergierwirkung entfalten. Bei der werksseitigen Herstellung von Dispersionsfarben werden im Dissolver zunächst Wasser, gegebenenfalls im Gemisch mit Nebenbestandteilen wie Netzmittel, Antischaummittel, Konservierungsmittel vorgelegt und bei schnelllaufendem Rührwerk Pigmente und Füllstoffe langsam eingetragen. Nach Beendigung des Dispergiervorgangs wird die so erhaltene Pigmentpaste bei langsam laufendem Rührwerk mit einer Kunststoff-Dispersion als Bindemittel vermischt. Die fertige Farbe wird in Gebinden ausgeliefert, welche einen Wasseranteil in der Dispersionsfarbe von 30 bis 50 % aufweisen.

Zur Herstellung von Dispersionsfarben können auch in Wasser redispergierbare Kunststoffpulver (Dispersionspulver) eingesetzt werden. Dispersionspulver sind Kunststoffpulver welche sich in Wasser einrühren lassen, unter Bildung einer stabilen, wässrigen Kunststoffdispersion. Mit der Entwicklung von in Wasser redispergierbaren Kunststoffpulvern wie den Vinnapas^{R} Dispersionspulvern der Wacker-Chemie besteht nun die Möglichkeit den Transport des großen Wasseranteils in der Dispersionsfarbe zu umgehen und die Dispersionsfarbe direkt am Ort der Verarbeitung mittels einer Pulvermischung und Wasser anzurühren. Bisher ist man dabei so vorgegangen, daß das Dispersionspulver bzw. die das Dispersionspulver enthaltende Pulverzusammensetzung mittels eines Rührholzes oder einer mit Rührer ausgestatteten Bohrmaschine vor Ort in das Anmachwasser eingerührt wurde. In der Regel wird mit dieser Verfahrensweise nicht die gleiche Qualität erzielt wie bei einer werksseitig, in fest installierten Dissolvern hergestellten, flüssigen Dispersionsfarbe. Der Grund dafür ist, daß die für die gute Dispergierwirkung notwendigen Scherkräfte bei dieser Vorgehensweise nicht erzielt werden können.

Es bestand daher die Aufgabe eine mobile, leicht handhabbare Vorrichtung zu entwickeln, mit welcher vor Ort, beispielsweise im Baustelleneinsatz, aus pulverförmigen Bestandteilen eine Flüssigfarbe hergestellt werden kann, deren Qualität der von werksseitig hergestellten Dispersionsfarben entspricht.

Gegenstand der Erfindung ist eine mobile Vorrichtung zur Herstellung von wässrigen Flüssigfarben aus pulverförmigen Bestandteilen und Wasser, umfassend einen fahrbaren Rahmen 1 mit
a) einer Mischeinheit aus Mischmotor 2 und dem Dissolver 3, welche über eine Feder 4 in den Mischbehälter 5 abgesenkt werden kann, und
b) einer Dosiereinheit mit Dosiermotor 6, dem Dosierbehälter 7 mit einem Förderelement 8, und dem Einfülltrichter 9, und
c) einer Schalteinheit 10 mit Steuerelementen zur Steuerung des Dosiervorgangs und des Mischvorgangs.

Die Vorrichtung wird nachfolgend anhand von Zeichnungen näher erläutert. Die Zeichnungen zeigen schematische Darstellungen eines bevorzugten Ausführungsbeispiels.

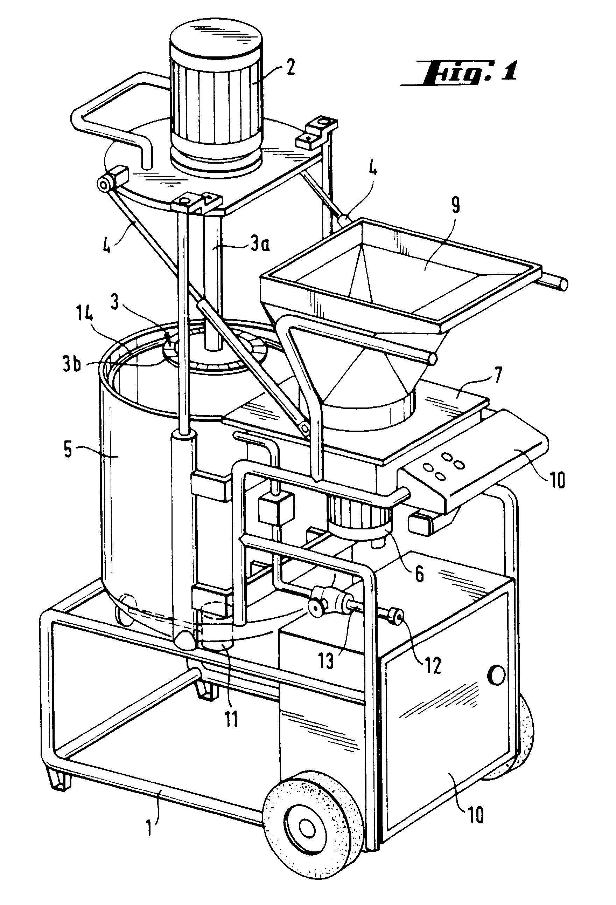

Die mobile Vorrichtung nach Fig. 1 umfaßt einen fahrbaren Rahmen 1, beispielsweise ein mit arretierbaren Rollen versehenes Metallgestell. Am oberen Ende des Rahmens ist der Mischmotor 2 zum Antrieb des Dissolvers 3 angeordnet. Der Dissolver 3 umfaßt eine auswechselbare Welle 3a und eine Dissolverscheibe 3b. Die Mischeinheit aus Mischmotor 2 und Dissolver 3 kann mittels einer Feder 4, vorzugsweise einer Gasdruckfeder, in der Vertikalen bewegt werden.

Bei dem Mischbehälter 5 handelt es sich um einen üblicherweise zylindrischen Behälter, gegebenenfalls mit abgerundetem Boden, der vorzugsweise aus Metall, beispielsweise Edelstahl, gefertigt ist. Der Durchmesser D des Mischbehälters 5 beträgt vorzugsweise 200 mm bis 400 mm. Das Verhältnis H/D von der Höhe H des Mischbehälter zum Durchmesser D beträgt vorzugsweise 1 : 1 bis 2 : 1. Zur Entnahme der fertigen Dispersionsfarbe ist der Mischbehälter 5, vorzugsweise am Boden des Behälters mit einem Entnahmeventil 11 ausgerüstet. In einer bevorzugten Ausführungsform ist der Mischbehälter mit einem Sensor zur Füllstandsanzeige ausgestattet.

Bevorzugt ist auch eine Ausführungsform bei der die Vorrichtung mit einem Anschluß 12 zur Zuleitung von Wasser ausgerüstet ist. Vom Wasseranschluß aus führt eine fest installierte Leitung 13 zum Mischbehälter 5. Am meisten bevorzugt wird eine Ausführungsform in der der Mischbehälter 5 mit einer Ringleitung 14 ausgestattet ist, welche durch die fest installierte Leitung 13 gespeist wird, und an deren Unterseite sich Löcher zum Wasseraustritt in das Mischgefäß 5 befinden. Die Ringleitung ist möglichst hoch im Mischbehälter, vorzugsweise knapp unter dem Dosierbehälter 7, angeordnet.

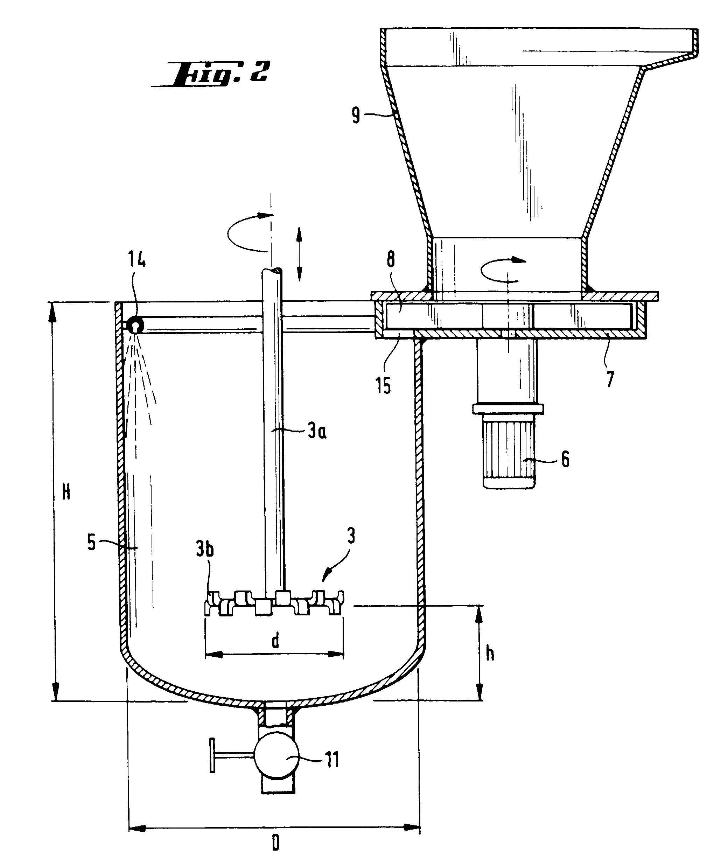

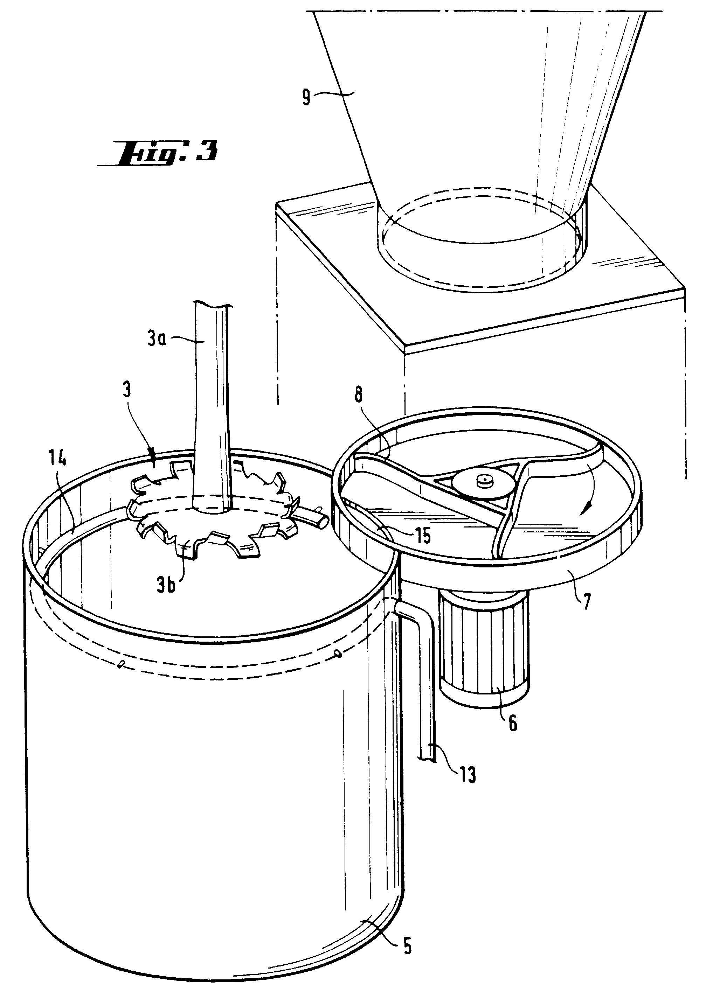

Der Dissolver 3 umfaßt eine senkrecht nach unten und zentrisch zum Mischbehälter 5 angeordnete Welle 3a und eine Dissolverscheibe 3b. Bei der Dissolverscheibe 3b handelt es sich üblicherweise um eine Stahlscheibe, welche mit Zähnen ausgerüstet ist. Eine bevorzugte Formgebung der Dissolverscheibe 3b kann den Abbildungen Fig. 2 und Fig. 3 entnommen werden.

Die Dispergierleistung wird wesentlich durch die Dimensionierung der Welle 3a und der Dissolverscheibe 3b mitbestimmt. In Figur 2 ist eine bevorzugte Ausführungsform dargestellt. Das Verhältnis d/D des Durchmessers d der Dissolverscheibe 3b zum Durchmesser D des Mischbehälters 5 beträgt vorzugsweise 0.3 bis 0.5. Die Welle 3a ist vorzugsweise so dimensioniert, daß die Dissolverscheibe 3b während des Mischvorgangs auf einen Bodenabstand h zum Boden des Mischbehälters 5 von 0.3 d bis 0.7 d abgesenkt werden kann, wobei d für den Durchmesser der Dissolverscheibe 3b steht.

Ein weiteres Element der erfindungsgemäßen Vorrichtung ist die Dosiereinheit zur Zudosierung der pulverförmigen Bestandteile. Die Dosiereinheit ist in Figur 3 näher erläutert und umfaßt einen zylindrischen, oben geöffneten Dosierbehälter 7, welcher mit einem Förderelement 8 zur Zuteilung des Pulvers in den Mischbehälter 5 ausgerüstet ist. Als Förderelement 8 geeignet ist beispielsweise eine Rotorscheibe mit sternförmig angeordneten Abstreifern. Der Dosierbehälter 7 ist an der Oberkante des Mischbehälters 5 oder in einer Aussparung an der Oberkante des Mischbehälters 5 so angebracht, daß der Dosierbehälter in den Mischbehälter 5 hineinragt. Der Boden des Dosierbehälters 7 verfügt in dem Bereich, welcher in den Mischbehälter 5 hineinragt, über eine Öffnung 15, über die das Pulvermaterial in den Mischbehälter 5 gefördert wird.

Zur Befüllung des Dosierbehälters 7 ist dieser mit einem Einfülltrichter 9 ausgerüstet. In einer bevorzugten Ausführungsform ist der Einfülltrichter 9 mit einem Deckel verschließbar. Der Deckel ist vorzugsweise so konstruiert, daß dieser im geöffneten Zustand als Auflagefläche für das normalerweise in Säcke abgepackte Pulvermaterial dienen kann. Die Dimensionierung des Einfülltrichters 9 ist der des Mischbehälters 5 angepaßt und wird so gewählt, daß der Einfülltrichter 9 den Pulveranteil der Farbmenge, welche im Mischbehälter 5 abgemischt werden kann, in einer Charge aufnehmen kann.

Der Antrieb des Förderelements 8 erfolgt mittels des Dosiermotors 6, welcher unterhalb des Dosierbehälters 7 angeordnet ist.

Zur Steuerung der Fördergeschwindigkeit, zur Steuerung der Rührgeschwindigkeit während des Mischvorgangs sowie gegebenenfalls zur Steuerung der Wasserzufuhr ist die erfindungsgemäße Vorrichtung mit einer Schalteinheit 10 ausgerüstet. Vorzugsweise sind die optimalen Mischungsverhältnisse von Pulveranteil und Wasser, die Mischzeiten und die Zugaberaten von Wasser und Pulver in der Schalteinheit 10 fest programmiert.

Ein weiterer Gegenstand der Erfindung ist ein Verfahren zur Herstellung von wässrigen Flüssigfarben mittels Dispergierung von Dispersionspulver-Zusammensetzungen in Wasser unter Verwendung dieser Vorrichtung.

Die Rezepturen für Dispersionspulver-Zusammensetzungen zur Herstellung von wässrigen Flüssigfarben sind dem Fachmann bekannt und bedürfen hier keiner näheren Erläuterung. Im allgemeinen enthalten die Zusammensetzungen neben dem Dispersionspulveranteil noch Pigmente, beispielsweise Titandioxid oder anorganische bzw. organische Buntpigmente, Füllstoffe wie Calzite, Dolomite oder Kreide. Geeignet sind auch Zusammensetzungen, welche neben dem Dispersionspulver noch andere Bindemittel wie Kalk, Wasserglas und/oder Zement enthalten. Ebenso ist es möglich flüssige, wässrige Farben mittels pulverförmigen Bindemitteln wie Siliconharzpulver, allein oder in Kombination mit Dispersionspulver, herzustellen.

Die pulverförmigen Bestandteile der Dispersionspulver-Zusammensetzung werden als Gemisch in den Einfülltrichter 9 gefüllt und mittels des Förderelements 8 kontinuierlich in den Mischbehälter 5 gefördert. Zur Förderung bewährt hat sich ein langsam laufender Rotor 8 mit einer Umlaufgeschwindigkeit von 10 bis 20 U/min. Um ein Ankleben der pulverförmigen Partikel an der Wand des Mischbehälters zu verhindern, wird vorzugsweise ein Teil des Wassers, im allgemeinen die Hälfte bis zwei Drittel der Gesamtwassermenge der Rezeptur, bevorzugt durch Zuführung über die Ringleitung 14, vorgelegt. Nach Vorlage des Wasser wird der Dissolver 3 in den Mischbehälter 5 abgesenkt, und der Dissolver 3 sowie das Förderelement 8 gestartet. Die Rotationsgeschwindigkeit des Dissolvers 3 beträgt vorzugsweise 1000 bis 1500 U/min.

Der weitere Dispergiervorgang, welcher die Restwasserzugabe, die Pulverförderung und die Dauer des Mischungsvorgangs, gegebenenfalls die Variation der Fördergeschwindigkeit des Pulvers und der Rotationsgeschwindigkeit des Dissolvers, beinhaltet, kann über die Schalteinheit 10 automatisch geregelt werden. In einer bevorzugten Ausführungsform wird der gesamte Mischvorgang programmgesteuert durchgeführt, wobei die optimalen Mischungsverhältnisse, Mischzeiten, Dosierraten und die Dissolvergeschwindigkeit vorprogrammiert sind. Die Schalteinheit 10 beendet den Dispergiervorgang selbsttätig. Nach Beendigung der Dispergierung kann die fertige Flüssigfarbe am Entnahmeventil 11 entnommen werden.

Ein neuer Mischvorgang sollte nur nach vollständiger Entleerung des Mischbehälters 5 gestartet werden. Der Füllstand des Mischbehälters 5 kann beispielsweise durch einen eingebauten Sensor ermittelt und mittels LED-Anzeige angezeigt werden. Um Farbansetzungen bei längeren Standzeiten zu vermeiden, kann in einer weiteren bevorzugten Ausführungsform auch so vorgegangen werden, daß nach der vollständigen Entnahme der so erhaltenen Flüssigfarbe automatisch Wasser nachdosiert wird, wodurch eine sofortige Spülung des Mischbehälters 5 erzielt wird. Die Steuerung kann dabei so eingestellt werden, daß der Bediener entscheiden kann, ob die Nachdosierung von Wasser allein der Reinigung des Mischbehälters 5 dienen soll oder als Ansatz für eine neue Mischung verwendet werden soll.

Die manuelle Betätigung beschränkt sich bei der bevorzugten Ausführungsformen des Verfahrens auf das Einfüllen des pulverförmigen Materials und die Entnahme der fertig gemischten flüssigen Farbe. Der Vorteil der erfindungsgemäßen Vorrichtung besteht darin, daß man aufgrund des fahrbaren Mischgerätes nun in der Lage ist, eine flüssige, wässrige Dispersionsfarbe direkt am Ort der Anwendung, beispielsweise an der Baustelle, aus den Pulverbestandteilen und Wasser in der Qualität herzustellen, die bisher nur mit werkseitig installierten Dissolvern zu erhalten war. Mit dieser Vorrichtung kommen die Vorteile der Dispersionspulver im Vergleich zu wässrigen Bindemitteldispersionen voll zu tragen: Kein Transport von Wasser. Keine Lagerhaltung in geheizten Räumen zur Verhinderung des Einfrierens der Farbe. Erleichterte Entsorgung des Verpakkungsmaterials (Säcke anstelle von Eimern oder Fässern). Keine Notwendigkeit des Zusatzes von Lösungsmitteln oder Fungiziden.

## Patentansprüche

1. Mobile Vorrichtung zur Herstellung von wässrigen Flüssigfarben aus pulverförmigen Bestandteilen und Wasser, umfassend einen fahrbaren Rahmen (1) mit
a) einer Mischeinheit aus Mischmotor (2) und dem Dissolver (3), welche über eine Feder (4) in den Mischbehälter 5 abgesenkt werden kann, und
b) einer Dosiereinheit mit Dosiermotor (6), dem Dosierbehälter (7) mit einem Förderelement (8), und dem Einfülltrichter (9), und
c) einer Schalteinheit (10) mit Steuerelementen zur Steuerung des Dosiervorgangs und des Mischvorgangs.

2. Vorrichtung nach Anspruch 1, dadurch gekennzeichnet, daß der Dissolver (3) aus einer Welle (3a) und der Dissolverscheibe (3b) zusammengesetzt ist, wobei das Verhältnis d/D des Durchmessers d der Dissolverscheibe (3b) zum Durchmesser D des Mischbehälters (5) von 0.3 bis 0.5 beträgt, und die Welle 3a so dimensioniert ist, daß die Dissolverscheibe (3b) während des Mischvorgangs auf einen Bodenabstand h zum Boden des Mischbehälters (5) von 0.3 d bis 0.7 d abgesenkt werden kann, wobei d für den Durchmesser der Dissolverscheibe (3b) steht.

3. Verfahren zur Herstellung von wässrigen Flüssigfarben mittels Dispergierung von Dispersionspulver-Zusammensetzungen in Wasser unter Verwendung einer Vorrichtung nach Anspruch 1 oder 2, dadurch gekennzeichnet, daß der Wasseranteil im Mischbehälter (5) zumindest teilweise vorgelegt wird, die Dispersionspulver-Zusammensetzung in den Einfülltrichter (9) gefüllt wird und über das Förderelement (8) im Dosierbehälter (7) in den Mischbehälter (5) gefördert wird, und der Pulveranteil mit dem Dissolver (3) in Wasser dispergiert wird.

## Revendications

1. Dispositif mobile de préparation de peintures liquides aqueuses à partir d'éléments constitutifs pulvérulents et d'eau, comprenant un châssis déplaçable (1) comprenant :
a) une unité de mélange constituée d'un moteur de mélange (2) et du dispositif de dissolution (3), qui peut être abaissée dans le récipient de mélange (5) par l'entremise d'un ressort (4), et
b) une unité de dosage avec un moteur de dosage (6), le récipient de dosage (7) équipé d'un élément de transport (8), et la trémie de remplissage (9), et
c) une unité de commutation (10) avec des éléments de commande pour commander l'opération de dosage et l'opération de mélange.

2. Dispositif selon la revendication 1, caractérisé en ce que le dispositif de dissolution (3) est composé d'un arbre (3a) et du disque de dissolution (3b), le rapport d/D du diamètre d du disque de dissolution (3b) au diamètre D du récipient de mélange (5) étant de 0,3 à 0,5, et l'arbre 3a est dimensionné de telle sorte que le disque de dissolution (3b) puisse être abaissé au cours de l'opération de mélange à un niveau de fond h par rapport au fond du récipient de mélange (5) de 0,3 d à 0,7 d, d désignant le diamètre du disque de dissolution (3b).

3. Procédé de préparation de peintures liquides aqueuses par dispersion de compositions pulvérulentes de dispersion dans de l'eau en utilisant un dispositif selon la revendication 1 ou 2, caractérisé en ce que la fraction d'eau est au moins partiellement placée préalablement dans le récipient de mélange (5), la composition pulvérulente de dispersion est versée dans la trémie de remplissage (9) et est acheminée au récipient de mélange (5) par l'entremise de l'élément de transport (8) du récipient de dosage (7), et la fraction pulvérulente est dispersée avec le dispositif de dissolution (3) dans l'eau.

## Claims

1. Mobile appliance for the production of water-based liquid paints from pulverulent constituents and water, comprising a travelling frame (1) with
a) a mixing unit which consists of a mixing motor (2) and of the dissolver (3) and which can be lowered into the mixing container (5) via a spring (4), and
b) a metering unit with a metering motor (6), with the metering container (7) having a conveying element (8) and with the filling funnel (9), and
c) a switching unit (10) with control elements for controlling the metering operation and the mixing operation.

2. Appliance according to Claim 1, characterized in that the dissolver (3) is composed of a shaft (3a) and of the dissolver disc (3b), the ratio d/D of the diameter d of the dissolver disc (3b) to the diameter D of the mixing container (5) being 0.3 to 0.5, and the shaft (3a) being dimensioned in such a way that, during the mixing operation, the dissolver disc (3b) can be lowered to a distance h from the bottom of the mixing container (5) of 0.3 d to 0.7 d, d standing for the diameter of the dissolver disc (3b).

3. Method for the production of water-based liquid paints by means of the dispersal of dispersion powder compositions in water, using an appliance according to Claim 1 or 2, characterized in that the water fraction is fed at least partially into the mixing container (5), the dispersion powder composition is introduced into the filling funnel (9) and is conveyed into the mixing container (5) via the conveying element (8) in the metering container (7), and the powder fraction is dispersed in the water by means of the dissolver (3).
